# EUROPEAN PATENT APPLICATION

(11) **EP 2 977 659 A1**
(43) Date of publication of application: **27.01.2016**
(21) Application number: 14768244.7
(22) Date of filing: 07.03.2014
(51) Int. Cl.: F16K 47/04, F15B 11/00, F15B 11/08, F16K 3/26, F16K 11/10

(54) **SHOCK-ABSORBING VALVE**

(30) Priority: 21.03.2013 JP 2013058256
(71) Applicant: Kawasaki Jukogyo Kabushiki Kaisha, Kobe-shi, Hyogo 650-8670 (JP)
(72) Inventor: MATSUO, Masahiro, Hyogo 651-2239 (JP); KAWAKAMI, Ryo, Hyogo 651-2239 (JP)
(74) Representative: Piésold, Alexander James
(86) International application number: PCT/JP2014/001275
(87) International publication number: WO 2014/147987

(57) **Abstract**

A cushion valve (1) includes a housing (2) having a pair of primary chambers (25A and 25B) and a pair of secondary chambers (26A and 26B). A first spool (3) and a pair of second spools (4A and 4B) are arranged in the housing (2). Biasing members (6) are respectively arranged between the first spool (3) and the second spool (4A) and between the first spool (3) and the second spool (4B). A first internal passage (35) communicating with a tank port (23) is formed at the first spool (3). Each of the second spools includes a land portion (43) configured to open or close an opening (27A or 27B) formed between the primary chamber and the corresponding secondary chamber. A second internal passage (45) including a restrictor (46) is formed at each of the second spools. When one of the second spools moves toward the first spool (3), the first internal passage (35) communicates with the secondary chamber located at the other second spool side.

## Description

### Technical Field

The present invention relates to a cushion valve arranged between a control valve configured to control the supply of operating oil to an actuator and a pilot operation valve configured to drive the control valve.

### Background Art

For example, a pilot cushion valve has been used in a hydraulic circuit of a construction machine in order to cushion a shock generated by a sudden operation of an operator. This pilot cushion valve is arrange between, for example, a pilot operation valve directly driven by a lever operation of the operator and a control valve to which pilot oil having pressure corresponding to the lever operation is supplied from the pilot operation valve and which controls the supply of operating oil to an actuator.

As the pilot cushion valves, there are a meter-in valve configured to regulate the supply of the pilot oil to the control valve at the time of the sudden operation and a meter-out valve configured to regulate the discharge of the pilot oil from the control valve at the time of the sudden operation. For example, PTL 1 discloses a hydraulic circuit in which meter-out pilot cushion valves are respectively arranged on both two pilot lines connecting the pilot operation valve and the control valve. Each of the pilot cushion valves is configured to generate a response delay in accordance with a pressure difference between a primary side and a secondary side when supplying the pilot oil from the pilot operation valve to the control valve.

### Citation List

### Patent Literature

PTL 1: Japanese Laid-Open Utility Model Application Publication No. 62-44105

### Summary of Invention

### Technical Problem

However, in a case where the hydraulic circuit is configured by using two pilot cushion valves, it is necessary to secure an installation space for the pilot cushion valves, and it takes a lot of time and labor to attach the pilot cushion valves. Therefore, it is desired that these two pilot cushion valves are configured as a single device.

When a lever of the pilot operation valve is operated, at the unoperated side, the pilot oil is discharged from the pilot line to a tank through a pilot circuit including the pilot lines and the pilot operation valve, or the pilot oil is supplied to the pilot line from the tank through the pilot circuit. However, since the pressure loss of the pilot circuit is generally high, it is desired that the pilot line at the unoperated side is short-circuited with the tank.

Here, an object of the present invention is to provide a cushion valve that can be incorporated in two pilot lines and can be directly connected to a tank.

### Solution to Problem

To solve the above problems, a cushion valve of the present invention includes: a housing including a pair of primary chambers respectively communicating with a pair of primary ports, a pair of secondary chambers located at an inner side of the pair of primary chambers to respectively communicate with a pair of secondary ports, and a tank port formed between the pair of secondary chambers; a first spool extending so as to connect the pair of secondary chambers and including a first internal passage communicating with the tank port; a pair of second spools respectively arranged at both sides of the first spool, each of the second spools including a land portion configured to open or close an opening formed between the corresponding primary chamber and the corresponding secondary chamber, each of the second spools being provided with a second internal passage including a restrictor and connecting the corresponding primary chamber and the corresponding secondary chamber; and biasing members respectively arranged between the first spool and one of the second spools and between the first spool and the other second spool so as to each bias the first spool and the corresponding second spool in such a direction that the first spool and the corresponding second spool are separated from each other, wherein when one of the second spools moves toward the first spool, the first spool moves from a neutral position toward the other second spool, and the first internal passage communicates with the secondary chamber located at the other second spool side.

According to the above configuration, in a state where, for example, a pilot operation valve including a lever is connected to the primary ports of the cushion valve, and a control valve for controlling the supply of operating oil to an actuator is connected to the secondary ports of the cushion valve, the biasing force of the biasing members causes the second spools to be respectively located at stand-by positions and the first spool to be located at a neutral position. Then, when the lever of the pilot operation valve is inclined, and the pressure of the primary chamber located at one second spool side increases, this primary chamber communicates with the secondary chamber through the opening by the movement of the second spool, and the first internal passage communicates with the other secondary chamber at the other second spool side by the movement of the first spool. Therefore, the pilot oil is supplied from the primary port through the secondary port to the control valve, and the pilot oil is discharged from the control valve through the secondary port to the tank port. In contrast, when the lever of the pilot operation valve is returned to the neutral position, one of the second spools is pushed back by the biasing force of the biasing member. Thus, the opening is first closed, and the second spool then returns to the stand-by position. After the opening is closed, the pilot oil discharged from the control valve is discharged to the tank through the second internal passage including the restrictor. Even in a case where the lever of the pilot operation valve is reversely operated, the cushion valve operates in the same manner as above although one of the second spools and the other second spool are inverted.

To be specific, the shock generated when the lever is suddenly moved to the neutral position from the inclined state is cushioned by the pilot oil flowing through the restrictor of the second internal passage. Since the cushion valve includes a pair of primary ports, a pair of secondary ports, and the tank port, the cushion valve can be incorporated in two pilot lines and can be directly connected to the tank.

The cushion valve may be configured such that when viewed from a direction in which the first spool and the pair of second spools are lined up, a project area of the land portion is larger than the project area of the first spool. According to this configuration, even in a case where the switching operation of the pilot operation valve is performed such that the actuation of the actuator is reversed, satisfactory responsiveness can be obtained.

For example, the cushion valve may be configured such that: the opening is defined by a cylindrical surface, and the land portion has such a disc shape that allows the land portion to slidably contact the opening; the first spool is formed in a rod shape having a circular cross section; and a diameter of the land portion is larger than a maximum diameter of the first spool.

The cushion valve may be configured such that the first spool is formed by two spool bodies separated from each other in an axial direction of the first spool. According to this configuration, the first spool can be easily manufactured, and the high-response cushion valve can be easily realized.

### Advantageous Effects of Invention

The present invention can provide a cushion valve that can be incorporated in two lines and has a simple configuration.

### Brief Description of Drawings

Fig. 1 is a cross-sectional view of a cushion valve according to one embodiment of the present invention.
Fig. 2 is a configuration diagram of a pilot valve.
Figs. 3A and 3B are diagrams each showing behaviors of the cushion valve of Fig. 1.
Figs. 4A and 4B are diagrams each showing the behaviors of the cushion valve of Fig. 1.

### Description of Embodiments

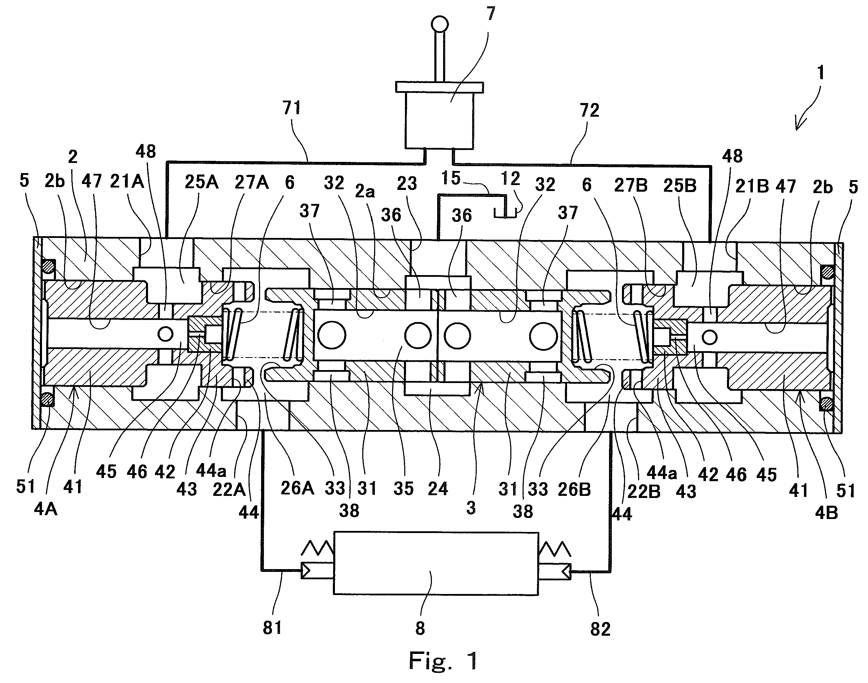

Fig. 1 shows a cushion valve 1 according to one embodiment of the present invention. The cushion valve 1 can be incorporated in two pilot lines and directly connected to a tank. For example, the cushion valve 1 is used in a hydraulic circuit of a construction machine. Specifically, the cushion valve 1 is arranged between a control valve 8 for controlling the supply of operating oil to an actuator (not shown) and a pilot operation valve 7.

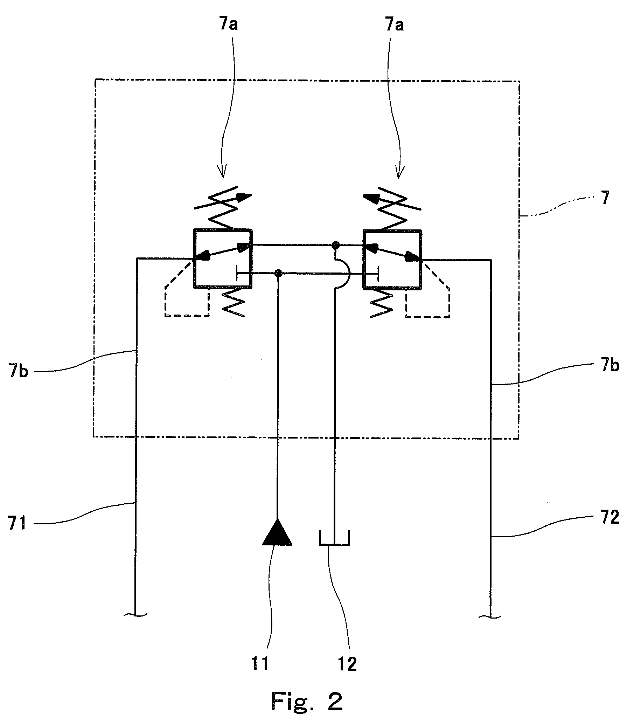

The pilot operation valve 7 is, for example, a pilot operation valve including a lever and is directly driven by a lever operation of an operator. Instead of the lever, the pilot operation valve 7 may include the other operation tool, such as a direct-acting knob or a rotary knob. More specifically, as shown in Fig. 2, the pilot operation valve 7 includes: a pair of valve mechanisms 7a connected to an hydraulic source 11 and a tank 12; and a pair of supply/discharge passages 7b respectively extending from the pair of valve mechanisms 7a. Any one of the pair of valve mechanisms 7a is selectively driven by the lever operation of the operator. When the valve mechanisms 7a are not driven by the lever operation, the valve mechanisms 7a maintain a state where the supply/discharge passages 7b communicate with the tank 12. When the valve mechanisms 7a are driven by the lever operation, the valve mechanisms 7a supply pilot oil to the supply/discharge passages 7b, the pilot oil having pressure corresponding to the lever operation.

As shown in Fig. 1, the cushion valve 1 has a symmetrical structure relative to the center of the cushion valve 1. Specifically, the cushion valve 1 includes a housing 2 on which primary ports 21A and 21B, secondary ports 22A and 22B, and a tank port 23 are formed. A first spool 3 is arranged in the housing 2, and a pair of second spools 4A and 4B are respectively arranged at both sides of the first spool 3. The primary ports 21A and 21B are respectively connected to the supply/discharge passages 7b of the pilot operation valve 7 via primary pilot pipes 71 and 72. The secondary ports 22A and 22B are respectively connected to pilot ports of the control valve 8 via secondary pilot pipes 81 and 82. The tank port 23 is connected to the tank 12 via a tank pipe 15.

The housing 2 is a hollow tubular body, and both side openings of the housing 2 are respectively closed by lids 5. Sealing members 51 are respectively arranged between one of the end surfaces of the housing 2 and the corresponding lid 5 and between the other end surface of the housing 2 and the corresponding lid 5. Hereinafter, for ease of explanation, one of directions along an axial direction of the housing 2 is also referred to as a right direction, and the other direction is also referred to as a left direction.

The housing 2 includes a first sliding chamber 2a that is located at a middle of the housing 2 and holds the first spool such that the first spool is slidable. The housing 2 further includes a pair of second sliding chambers 2b that are respectively located at both sides of the first sliding chamber 2a and respectively hold the second spools 4A and 4B such that the second spools 4A and 4B are slidable. The second sliding chambers 2b are respectively open on the end surfaces of the housing 2. A secondary chamber (26A or 26B) and a primary chamber (25A or 25B) are formed between the first sliding chamber 2a and each of the second sliding chambers 2b such that the secondary chamber is located at an inner side and the primary chamber is located at an outer side. In other words, the first sliding chamber 2a, the secondary chamber (26A or 26B), the primary chamber (25A or 25B), and the second sliding chamber 2b are arranged in this order from the center side along the axial direction of the housing 2. Further, an opening 27A is formed between the secondary chamber 26A and the primary chamber 25A so as to connect the secondary chamber 26A and the primary chamber 25A, and an opening 27B is formed between the secondary chamber 26B and the primary chamber 25B so as to connect the secondary chamber 26B and the primary chamber 25B.

Biasing members 6 are respectively arranged between the first spool 3 and the second spool 4A and between the first spool 3 and the second spool 4B. Each of the biasing members 6 biases the first spool 3 and the second spool 4A or 4B in such a direction that the first spool 3 and the second spool 4A or 4B are separated from each other. In the present embodiment, springs are used as the biasing members 6. When there are no pressure difference between the primary chamber 25A and the secondary chamber 26A which are divided by one of below-described land portions 43 and no pressure difference between the primary chamber 25B and the secondary chamber 26B which are divided by the other land portion 43, the biasing force of the biasing members 6 cause the second spools 4A and 4B to be maintained at stand-by positions, that is, the second spools 4A and 4B to respectively contact the lids 5 and the first spool 3 to be maintained at a neutral position, that is, a middle of the first spool 3 to coincide with a middle of the housing 2.

In the present embodiment, each of the first spool 3 and the second spools 4A and 4B has a rod shape having a circular cross section, and each of the above-described chambers has a cylindrical shape extending in the axial direction of the housing 2. Each of the openings 27A and 27B also has a circular cross section and is defined by a cylindrical surface.

An enlarged-diameter portion 24 is provided at a middle of the first sliding chamber 2a, and the tank port 23 communicates with the enlarged-diameter portion 24. The secondary ports 22A and 22B respectively communicate with the secondary chambers 26A and 26B, and the primary ports 21A and 21B respectively communicate with the primary chambers 25A and 25B.

In the present embodiment, the diameter of the first spool 3 is constant over the entire length. The length of the first spool 3 is set to be longer than an axial length of the first sliding chamber 2a, and the first spool 3 extends so as to connect the secondary chambers 26A and 26B. A first internal passage 35 that communicates with the tank port 23 through the enlarged-diameter portion 24 is formed at the first spool 3. Depressions 33 are respectively formed on both end surfaces of the first spool 3 so as to respectively accommodate end portions of the biasing members 6.

In the present embodiment, the first spool 3 is formed by two spool bodies 31 that are separated from each other in the axial direction of the first spool 3. With this, the first spool 3 can be easily manufactured. However, the first spool 3 may be a single member. Each of the spool bodies 31 includes an axial hole 32 that is open on a center-side end surface of the spool body 31 such that a bottom wall of the depression 33 remains. In addition, a plurality of (in the illustrated example, four) through holes 36 extending in a radial direction from the axial hole 32 are provided at a center-side end portion of the spool body 31. Further, a plurality of (in the illustrated example, four) through holes 37 extending in the radial direction from the axial hole 32 are provided at an end portion of the spool body 31, the end portion being located at the depression 33 side. In addition, an annular groove 38 that connects these through holes 37 are also formed at this end portion of the spool body 31. The annular grooves 38, through holes 37, axial holes 32, and through holes 36 of the spool bodies 31 constitute the first internal passage 35.

The annular grooves 38 of the spool bodies 31 are formed so as to be closed by a wall surface of the first sliding chamber 2a when the first spool 3 is located at the neutral position. In other words, when the first spool 3 is located at the neutral position, the first internal passage 35 is blocked from the secondary chambers 26A and 26B. When the first spool 3 slightly moves to the right or the left from the neutral position, the annular groove 38 located at a side to which the first spool 3 has moved communicates with the secondary chamber (26A or 26B).

It should be noted that the first internal passage 35 is only required to include: at least one opening that is located at the middle of the first internal passage 35 and communicates with the tank port 23; and two openings that are closed by the first sliding chamber 2a and can respectively communicate with the secondary chambers 26A and 26B. As long as this is satisfied, the first internal passage 35 and its peripheral components may be suitably modified. For example, the present embodiment may be configured such that: the enlarged-diameter portion 24 is omitted; the tank port 23 is extended to the first spool 3; instead of the plurality of through holes 36 at the center side, a cutout extending in the radial direction from the axial hole 32 is provided at the center-side end surface of each spool body 31; and one through hole is formed by the cutouts of the spool bodies 31.

Each of the second spools 4A and 4B includes: the land portion 43 having a disc shape and slidably contacting the opening (27A or 27B); a large-diameter portion slidably contacting the second sliding chamber 2b; and a small-diameter portion located between the land portion 43 and the large-diameter portion. The above-described biasing member 6 is received by a surface of the land portion 43, the surface being opposed to the first spool 3. The diameter of the land portion 43 and the diameter of the large-diameter portion are equal to each other in the present embodiment but may be different from each other. However, it is preferable that: the diameter of the land portion 43 be larger than the diameter of the small-diameter portion; and a step be formed between the land portion 43 and the small-diameter portion.

When each the second spools 4A and 4B is located at the stand-by position, the land portion 43 overlaps the opening (27A or 27B) by a predetermined distance ΔD. The predetermined distance ΔD is a movement distance of the second spool required when the opening is opened by the land portion 43.

In the present embodiment, a project area of the land portion 43 is set to be larger than the project area of the first spool 3 when viewed from the axial direction of the housing 2. Specifically, a diameter D1 of the land portion 43 is larger than a maximum diameter D2 of the first spool 3 (in the present embodiment, the maximum diameter D2 of the first spool 3 is the diameter of the first spool 3 that is constant in diameter over the entire length).

A second internal passage 45 including a restrictor 46 is formed at each of the second spools 4A and 4B so as to connect the primary chamber (25A or 25B) and the secondary chamber (26A or 26B).

In the present embodiment, each of the second spools 4A and 4B includes a main body 41 and a restriction member 42. It should be noted that each of the second spools may be a single member. The main body 41 is provided with a depression extending from a surface, located at the first spool 3 side, of the land portion 43 to a position overlapping the small-diameter portion. The restriction member 42 is fitted in the depression. The main body 41 is provided with an axial hole 47 penetrating the main body 41 along a center line of the main body 41. The main body 41 is also provided with a plurality of (in Fig. 1, four) through holes 48 that extend in the radial direction from the axial hole 47 and are open on an outer peripheral surface of the small-diameter portion.

The restriction member 42 is a tubular member. An inner diameter of the restriction member 42 is relatively large at the secondary chamber side and relatively small at the axial hole 47 side, and the inner diameter at the axial hole 47 side defines the restrictor 46. To be specific, the second internal passage 45 is constituted by: an inner portion of the restriction member 42; the through holes 48; and a portion of the axial hole 47, the portion laying from the through holes 48 toward the restriction member 42 side.

Further, a peripheral wall 44 projects toward the first spool 3 from a peripheral portion of a center-side surface of the land portion 43 so as to form the depression that accommodates the end portion of the biasing member 6. The peripheral wall 44 is provided with a plurality of through holes 44a that allow the pilot oil to flow between the inside and outside of the peripheral wall 44 even when the peripheral wall 44 contacts the first spool 3.

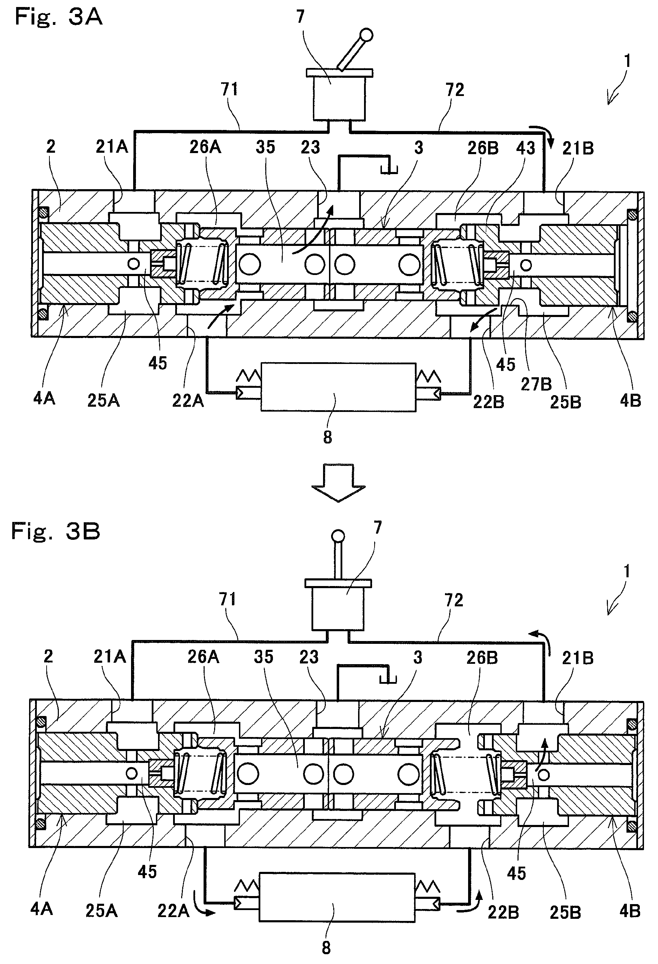

Next, behaviors of the cushion valve 1 will be explained. First, a behavior performed when the lever of the pilot operation valve 7 is inclined to the right side will be explained as one example in reference to Figs. 3A and 3B. Needless to say, when the lever is inclined to the left side, the cushion valve 1 performs the same behavior although the right and the left are inverted.

In a state where the lever of the pilot operation valve 7 is not operated, the secondary chambers 27A and 27B are open to the tank 12 through the second internal passages 45, the primary chambers 26A and 26B, the primary pilot pipes 71 and 72, and the pilot operation valve 7. Therefore, pressure in all the chambers in the cushion valve 1 is zero as gauge pressure.

When the lever is inclined to the right side, the pilot oil having the pressure corresponding to the lever operation is supplied from the pilot operation valve 7 through the right-side primary pilot pipe 72 and the right-side primary port 21B to the right-side primary chamber 25B.

When the pressure of the primary chamber 25B becomes higher than the pressure of the secondary chamber 26B by predetermined pressure or more due to the supply of the pilot oil to the primary chamber 25B, the right-side second spool 4B moves from the stand-by position toward the first spool 3. This predetermined pressure is pressure corresponding to the biasing force of the biasing member 6. The second spool 4B moves in a state where the land portion 43 overlaps the opening 27B by the above-described predetermined distance ΔD, that is, in a state where the opening 27B is closed by the land portion 43. When the second spool 4B further moves, the land portion 43 opens the opening 27B as shown in Fig. 3A. With this, the pilot oil is supplied from the primary port 21B through the primary chamber 25B, the opening 27B, the secondary chamber 26B, and the secondary port 22B to the control valve 8.

When the second spool 4B starts moving to the left side, the first spool 3 is pushed by the second spool 4B via the biasing member 6 to move toward the left-side second spool 4A. At this time, the pilot oil in the left-side secondary chamber 26A is introduced from the secondary chamber 26A through the second internal passage 45 of the second spool 4B to the primary chamber 25A. When the first spool 3 slightly moves to the left side, the first internal passage 35 communicates with the left-side secondary chamber 26A. With this, the pilot oil is discharged from the control valve 8 through the secondary port 22A, the secondary chamber 26A, and the first internal passage 35 to the tank port 23.

Normally, by the pressure difference between the right-side secondary chamber 26B and the left-side secondary chamber 26A, the first spool 3 first contacts the left-side second spool 4A, and the right-side second spool 4B then contacts the first spool 3.

In contrast, as shown in Fig. 3B, when the lever is returned to the neutral position from an inclined state, first, the pressure of the right-side primary chamber 25B immediately decreases, and the second spool 4B is pushed back to the right side by the biasing force of the biasing member 6. With this, the opening 27B is immediately closed by the land portion 43, and then, the second spool 4B returns to the stand-by position. After the opening 27B is closed, the pilot oil from the control valve 8 is introduced from the secondary chamber 26B through the second internal passage 45 to the primary chamber 25B. To be specific, the pilot oil flows through the restrictor 46 of the second internal passage 45 to be discharged to the tank 12. At the left side, the pilot oil is supplied from the tank 12 through the tank port 23, the first internal passage 35, the secondary chamber 26A, and the secondary port 22A to the control valve 8. When the pressure of the right-side secondary chamber 26B becomes equal to the pressure of the left-side secondary chamber 26A, the first spool 3 returns to the neutral position.

As above, in the cushion valve 1 of the present embodiment, when the pilot oil is discharged from the control valve 8, the pilot oil flows through the restrictor 46 of the second internal passage 45. To be specific, the shock generated when the lever is suddenly moved to the neutral position from the inclined state is cushioned by the pilot oil flowing through the restrictor 46 of the second internal passage 45.

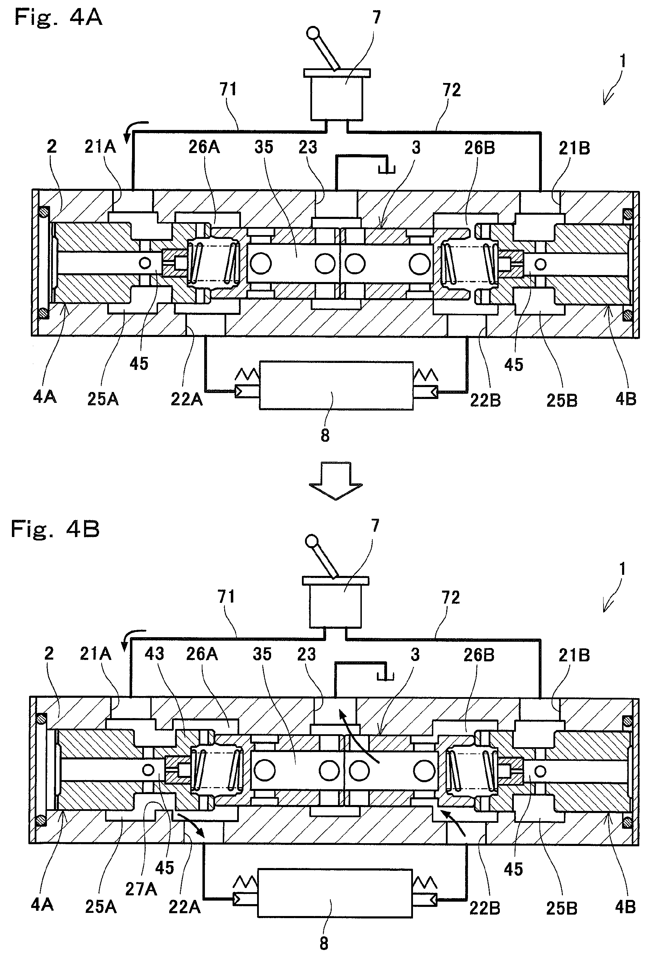

Next, the following will explain a behavior of the cushion valve 1 in a case where a switching operation is performed, that is, a state where the lever is inclined to the right side as shown in Fig. 3A is switched to a state where the lever is inclined to the left side as shown in Fig. 4A.

In a case where the switching operation is performed, the state shown in Fig. 3B is just realized for a moment. Therefore, before the pilot oil in the right-side secondary chamber 26B is adequately discharged, and the pressure in the secondary chamber 26B is adequately lowered, the pilot oil may be supplied to the left-side primary chamber 25A. At this time, the first spool 3 is located at a left side of the neutral position. Therefore, as shown in Fig. 4A, the left-side second spool 4A may contact the first spool 3 before the left-side opening 27A (see Fig. 4B) is opened. In the present embodiment, the diameter D1 of the land portion 43 is set to be larger than the maximum diameter D2 of the first spool 3. Therefore, even in a case where the left-side second spool 4A contacts the first spool 3 before the opening 27A is opened, the first spool 3 can be forcibly moved to the right side as shown in Fig. 4B. To be specific, according to the cushion valve 1 of the present embodiment, even in a case where the switching operation of the pilot operation valve 8 is performed such that the actuation of the actuator is reversed, satisfactory responsiveness can be obtained.

Depending on the setting of the predetermined distance ΔD, the diameter D1 of the land portion 43 can be set to be equal to the maximum diameter D2 of the first spool 3.

### Modification Example

The present invention is not limited to the above-described embodiment. Various modifications may be made within the scope of the present invention.

For example, each of the cross-sectional shapes of the first spool 3 and the second spools 4A and 4B does not have to be a circular shape and may be a polygonal shape or a spline shape.

### Industrial Applicability

The cushion valve of the present invention can be effectively used in not only hydraulic circuits of construction machines but also hydraulic circuits of various machines.

### Reference Signs List

- 1: cushion valve
- 2: housing
- 21A, 21B: primary port
- 22A, 22B: secondary port
- 23: tank port
- 25A, 25B: primary chamber
- 26A, 26B: secondary chamber
- 27A, 27B: communication passage
- 3: first spool
- 35: first internal passage
- 4A, 4B: second spool
- 43: land portion
- 45: second internal passage
- 46: restrictor
- 6: biasing member

## Claims

1. A cushion valve comprising:
a housing including
a pair of primary chambers respectively communicating with a pair of primary ports,
a pair of secondary chambers located at an inner side of the pair of primary chambers to respectively communicate with a pair of secondary ports, and
a tank port formed between the pair of secondary chambers;
a first spool extending so as to connect the pair of secondary chambers and including a first internal passage communicating with the tank port;
a pair of second spools respectively arranged at both sides of the first spool, each of the second spools including a land portion configured to open or close an opening formed between the corresponding primary chamber and the corresponding secondary chamber, each of the second spools being provided with a second internal passage including a restrictor and connecting the corresponding primary chamber and the corresponding secondary chamber; and
biasing members respectively arranged between the first spool and one of the second spools and between the first spool and the other second spool so as to each bias the first spool and the corresponding second spool in such a direction that the first spool and the corresponding second spool are separated from each other, wherein
when one of the second spools moves toward the first spool, the first spool moves from a neutral position toward the other second spool, and the first internal passage communicates with the secondary chamber located at the other second spool side.

2. The cushion valve according to claim 1, wherein when viewed from a direction in which the first spool and the pair of second spools are lined up, a project area of the land portion is larger than the project area of the first spool.

3. The cushion valve according to claim 2, wherein:
the opening is defined by a cylindrical surface, and the land portion has a disc shape and slidably contacts the opening;
the first spool is formed in a rod shape having a circular cross section; and
a diameter of the land portion is larger than a maximum diameter of the first spool.

4. The cushion valve according to any one of claims 1 to 3, wherein the first spool is formed by two spool bodies separated from each other in an axial direction of the first spool.
